# EUROPÄISCHE PATENTSCHRIFT

(11) **EP 0 357 875 B1**
(45) Veröffentlichungstag und Bekanntmachung des Hinweises auf die Patenterteilung: **05.05.1993**
(21) Anmeldenummer: 89108817.1
(22) Anmeldetag: 17.05.1989
(51) Int. Cl.: F16J 15/32

(54) **Wellendichtung**
Shaft seal
Garniture étanche de l'arbre

(30) Priorität: 09.09.1988 DE 3830706
(43) Veröffentlichungstag der Anmeldung: 14.03.1990
(73) Patentinhaber: Firma Carl Freudenberg, 69469 Weinheim (DE)
(72) Erfinder: Sponagel, Stefan, Dr., D-6149 Rimbach 3 (DE); Wachowitz, Waldemar, D-6944 Hemsbach (DE)

(56) Entgegenhaltungen:
- DE-A- 2 453 118
- GB-A- 499 480

## Beschreibung

Die Erfindung betrifft eine Wellendichtung nach dem Oberbegriff von Anspruch 1. Eine derartige Wellendichtung ist aus der GB-A-499 480 bekannt.

Eine ähnliche Wellendichtung ist aus der DE-A-24 53 118 bekannt. Dabei sind mehrere, sich parallel zueinander erstreckende Staurippen vorhanden, die mit der Umfangsrichtung der abzudichtenden Welle einen spitzen Winkel einschließen, der so geneigt ist, daß auf das in den Zwischenräumen enthaltene, fließfähige Medium bei umlaufender Welle eine in Richtung des abzudichtenden Raumes weisende Förderwirkung ausgeübt wird. Diese ist indessen nur bei einer vorgegebenen Drehrichtung der Welle wirksam, was wenig befriedigend ist. Auch konnte die geringe Gebrauchsdauer der vorbekannten Dichtung bisher nicht überzeugen.

Der Erfindung liegt die Aufgabe zugrunde, eine Wellendichtung der eingangs genannten Art derart weiter zu entwickeln, daß sich unabhängig von der Drehrichtung der abzudichtenden Welle ein gutes Abdichtungsergebnis ergibt sowie eine wesentlich verbesserte Gebrauchsdauer.

Diese Aufgabe wird erfindungsgemäß bei einer Wellendichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Wellendichtung umschließen die Zylinderfläche, die Staurippe und die Welle kapillaraktive Freiräume, die hinsichtlich ihres Querschnittes so gering bemessen sind, daß darin auch bei Wellenstillstand stets abzudichtendes Medium latent vorhanden ist. Bei Inbetriebnahme der Dichtung ist es daher völlig ausgeschlossen, daß sich an irgendeiner Stelle der dynamischen Abdichtungszone ein Bereich trockener Reibung ergibt und es ist somit ein durchgehend in sich geschlossener Flüssigkeitsfilm von Beginn der Drehbewegung an vorhanden. Dieser haftet nicht in einer stabilen Weise den einander gegenüberliegenden Flächen an, sondern er erfährt wegen des Vorhandenseins der sinusförmig verlaufenden Staurippe eine Hin- und Herbewegung in sich selbst. Auch bei äußerst geringer Relativbewegung der einander gegenüberliegenden Flächen ist daher von Anfang an eine Bewegungsreibung der Flüssigkeitsbestandteile vorhanden und der Verschleiß dementsprechend gering. Diese wird auch durch äußere Einflüsse, beispielsweise durch einen höheren Druck im Bereich des abzudichtenden Raumes nicht nachteilig beeinflußt. Die der Staurippe in axialer Richtung vorgelagerten Bestandteile der Zylinderfläche bewirken vielmehr eine zuverlässige Abschirmung. Ihre axiale Erstreckung entspricht wenigstens der radialen Tiefe.

Der Flüssigkeitsfilm erfährt mit zunehmender Steigerung der Drehzahl eine zunehmende Aufweitung in radialer Richtung, was zugleich eine Reduzierung des Einflusses bedingt, den die Staurippe in bezug auf die Förderung des in den Freiräumen enthaltenen Flüssigkeitsvolumens auszuüben vermag. Die Staurippe hat in radialer Richtung nur eine Höhe von 0,15 bis 0,3 mm, diese geringe Höhe ist jedoch ausreichend, um bereits bei mittleren Drehzahlen eine gute Umwälzung des in den Freiräumen enthaltenen Flüssigkeitsvolumens in sich selbst zu bewirken.

Zusätzlich ergibt sich eine gewisse Restförderwirkung in axialer Richtung, die gerade ausreichend ist, um eine gute Abdichtung des abzudichtenden Raumens zu bewirken. Der Eintrag von Staub oder Sauerstoff in den Bereich der dynamischen Abdichtungszone ist jedoch bei der erfindungsgemäßen Wellendichtung weitestgehend unterbunden, und es wird angenommen, daß es maßgeblich hierauf zurückzuführen ist, daß die erfindungsgemäße Wellendichtung die Erzielung einer deutlich verbesserten Gebrauchsdauer gewährleistet. Zusätzlich ist die erzielte Dichtwirkung unabhängig von der Drehrichtung der abzudichtenden Welle. Eine universelle Verwendung ist problemlos möglich.

Die die abzudichtende Welle sinusförmig umschließende Staurippe schließt mit der Umfangsrichtung einen maximalen Steigungswinkel ein, der kleiner ist als 20°, vorzugsweise kleiner als 10° und insbesondere kleiner als 5°. Im letztgenannten Falle ist die Förderwirkung soweit reduziert, daß beispielsweise im Bereich der Abdichtung von Kurbelwellen auch bei höchsten Drehzahlen ein ausgezeichnetes Abdichtungsergebnis über lange Zeiträume erzielt wird.

Die Staurippe kann ein durch zwei einander schneidende Schrägflächen begrenztes Profil haben, wobei die dem abzudichtenden Raum zugewandte Schrägfläche mit der Dichtungsachse einen steileren Winkel einschließen soll als die gegenüberliegende Schrägfläche. Beide Schrägflächen können auch gegebenenfalls abgerundet ineinander übergehen.

Der Gegenstand der Erfindung wird nachfolgend anhand der beigefügten Zeichnung weiter verdeutlicht. Es zeigen:
- Fig. 1:: Eine Wellendichtung der erfindungsgemäßen Art in halbgeschnittener Darstellung.
- Fig. 2:: Eine modifizierte Ausführung mit zweiseitiger Wirksamkeit.
- Fig. 3:: Eine weitere modifizierte Ausführung mit zweiseitiger Wirksamkeit.

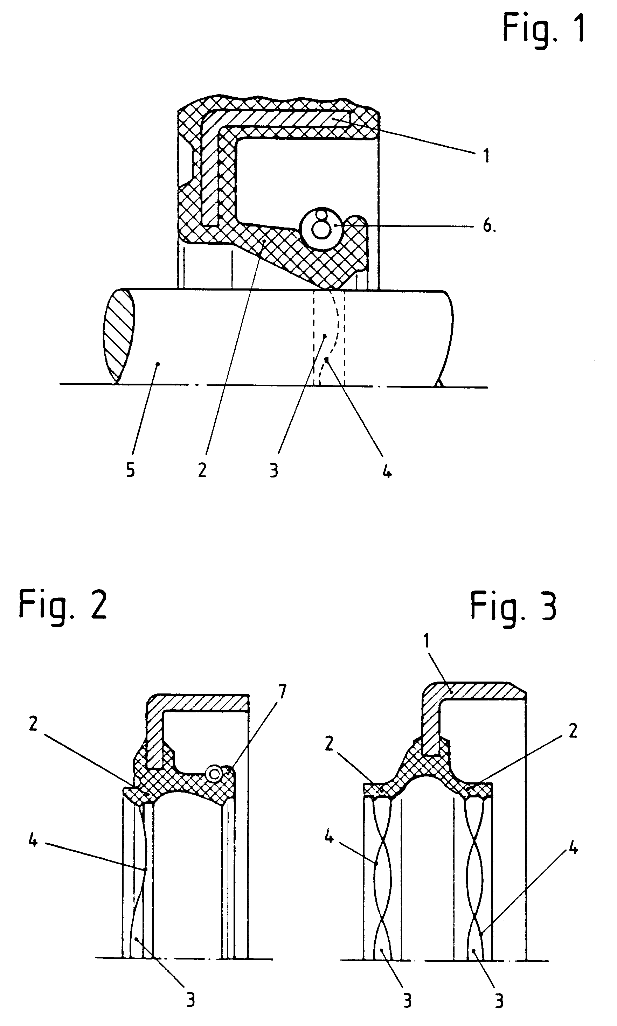

Die in Fig. 1 gezeigte Wellendichtung besteht aus dem Versteifungsring 1 und dem damit verbundenen Lippenring 2 aus polymerem Werkstoff, insbesondere aus Gummi. Die Verwendung von PTFE ist jedoch ebenfalls möglich.

Der Lippenring 2 umschließt die abzudichtende Welle 5 mit einer Zylinderfläche 3, auf der bei der Ausführung nach Fig. 1 eine Staurippe 4 angeordnet ist, die die abzudichtende Welle sinusförmig verlaufend und ineinander übergehend umschließt. Die Staurippe 4 ist in axialer Richtung beiderseits durch Schrägflächen begrenzt, die einander scharfkantig schneiden. Die Zylinderfläche 3 hat in axialer Richtung eine Ausdehnung, die diejenige der Staurippe 4 beiseits um den 1,5-fachen Wert des radialen Abstandes überragt. Die Staurippe 4 ist in radialer Richtung so niedrig bemessen, daß die von ihr, der Zylinderfläche 3 und der Welle 5 umschlossenen Freiräume bei Wellenstillstand kapillaraktive Freiräume umschließen. Sie sind bereits bei Wellenstillstand stets vollständig mit abzudichtendem Medium gefüllt. Bereits Bei einer minimalen Relativverdrehung der abzudichtenden Welle 5 in bezug auf die Wellendichtung ist daher stets die Ausbildung eines durchgehend in sich gschlossenen Flüssigkeitsfilmes im Bereich der dynamischen Abdichtungszone gewährleistet. Die Staurippe 4 hat bei dem gezeigten Ausführungsbeispiel bei einem Wellendurchmesser von 80 mm eine radiale Höhe von nur 0,16 mm.

Fig. 2 nimmt Bezug auf eine Ausführung, die für die gegenseitige Abdichtung zweier flüssigkeitsgefüllter Räume bestimmt ist. Die Abdichtung in Richtung des rechts vorgelagerten Raumes wird durch eine Dichtlippe 7 üblicher Bauart bewirkt, während die Abdichtung gegenüber dem links angrenzenden, flüssigkeitsgefüllten Raum durch eine Dichtung mit einem Lippenring 2 der erfindungsgemäßen Bauart bewirkt wird. Die zugehörige Dichtlippe ist dabei nicht mit einer Ringfeder belastet, weist jedoch im Bereich der dynamischen Abdichtungszone eine Zylinderfläche 3 auf, die bei Wellenstillstand die Oberfläche der abzudichtenden Welle in gleichmäßigem Abstand umschließt und aus der eine ineinander übergehende Staurippe 4 von sinusförmigem Verlauf radial nach innen vorspringt. Sie berührt die Zylinderfläche durchgehend auf ihrer ganzen Länge. Die Zylinderfläche 3 hat auch in diesem Falle in axialer Richtung eine größere Ausdehnung als die Staurippe 4. Letztere ist dadurch in einer ausgezeichneten Weise vor Umgebungseinflüssen geschützt. Die radiale Höhe der Staurippe 4 ist auch in diesem Falle äußerst gering und beträgt bei einem Wellendurchmesser von 65 mm 0,15 mm. Das Profil der Staurippe 4 wird durch zwei einander schneidender Kegelflächen begrenzt, welche abgerundet ineinanderübergehen.

Fig. 3 nimmt Bezug auf eine Ausführung, die ähnlich wie die Ausführung nach Fig. 2 zur gegenseitigen Abdichtung zweier flüssigkeitsgefüllter Räume bestimmt ist. An dem einzigen Versteifungsring 1 sind dementsprechend zwei Lippenringe 2 durch unmittelbares Anvulkanisieren festgelegt, die ineinander übergehen und innenseitig durch Zylinderflächen 3 begrenzt sind, auf denen jeweils zwei Staurippen 4 angeordet sind, welche in radialer Richtung nach innen vorspringen. Die Staurippen sind in axialer Richtung beiderseits durch Schrägflächen begrenzt, welche abgerundet ineinander übergehen. Die Staurippen sind auf jeder der beiden Zylinderflächen 3 von übereinstimmender Ausbildung und von übereinstimmendem Profil, jedoch jeweils in Umfangsrichtung relativ verdreht zueinander angebracht, derart, daß ein Tal jeweils der einen Staurippe dem Gipfel der anderen Staurippe in axialer Richtung vorgelagert ist. Hinsichtlich der Erzielung einer gleichmäßigen Umwälzung des unter normalen Betriebsbedingungen im Zwischenraum angeordneten Flüssigkeitsfilmes ist die Ausbildung von Vorteil.

## Patentansprüche

1. Wellendichtung, umfassend einen Versteifungsring (1) und einen damit verbundenen Lippenring (2) aus polymerem Werkstoff, bei der der Lippenring eine die abzudichtende Welle in geringem Abstand umschließende Zylinderfläche (3) aufweist, aus der wenigstens eine Staurippe (4) in radialer Richtung nach innen vorspringt, welche die Welle (5) sinusförmig verlaufend und ineinander übergehend umschließt, dadurch gekennzeichnet, daß die Zylinderfläche (3), die Staurippe(n) (4) und die Welle (5) kapillaraktive Freiräume umschließen, daß die Zylinderfläche (3) die Staurippe(n) (4) in axialer Richtung beiderseits überragt und daß der maximale Steigungswinkel zwischen der sinusförmig verlaufende Staurippe (4) und der Umfangsrichtung kleiner ist als 20°.

2. Wellendichtung nach Anspruch 1, dadurch gekennzeichnet, daß der maximale Winkel zwischen der Staurippe (4) und der Umfangsrichtung kleiner ist als 10°.

3. Wellendichtung nach Anspruch 1 oder 2, dadurch gekennzeichnet, daß der maximale Winkel zwischen der Staurippe (4) und der Umfangsrichtung kleiner ist als 5°.

4. Wellendichtung nach Anspruch 1 bis 3, dadurch gekennzeichnet, daß die Staurippe (4) ein durch zwei einander schneidende Schrägflächen begrenztes Profil aufweist und daß die dem abzudichtenden Raum zugewandte Schrägfläche eine steileren Winkel mit der Dichtungsachse einschließt als die gegenüberliegende Schrägfläche.

5. Wellendichtung nach Anspruch 4, dadurch gekennzeichnet, daß die Schrägflächen abgerundet ineinander übergehen.

## Claims

1. A shaft seal comprising a reinforming ring (1) and a lip ring (2) connected thereto made of polymer material, in which shaft seal the lip ring has a cylindrical surface (3) which surrounds with a small spacing the shaft to be sealed off and from which at least one baffle rib (4) projects inwards in the radial direction, which baffle rib surrounds the shaft (5), extending sinusoidally and changing gradually, characterised in that the cylindrical surface (3), the baffle rib(s) (4) and the shaft (5) surround capillary-active free spaces, in that the cylindrical surface (3) projects beyond the baffle rib(s) (4) in the axial direction on both sides, and in that the maximum angle of inclination between the sinusoidally extending baffle rib (4) and the circumferential direction is less than 20°.

2. A shaft seal according to claim 1, characterised in that the maximum angle between the baffle rib (4) and the circumferential direction is less than 10°.

3. A shaft seal according to claim 1 or 2, characterised in that the maximum angle between the baffle rib (4) and the circumferential direction is less than 5°.

4. A shaft seal according to any of claims 1 to 3, characterised in that the baffle rib (4) has a profile which is bounded by two intersecting sloping surfaces, and in that the sloping surface facing the space to be sealed off encloses a steeper angle with the sealing axis than the opposite sloping surface.

5. A shaft seal according to claim 4, characterised in that the sloping surfaces change gradually in a rounded manner.

## Revendications

1. Joint pour arbre, comportant un anneau de renforcement (1) et un anneau à lèvres (2), relié à celui-ci, formé d'un matériau polymère et pourvu d'une surface cylindrique (3) entourant à une faible distance d'espacement l'arbre à étancher et de laquelle fait saillie, radialement vers l'intérieur, au moins une nervure d'arrêt (4) qui entoure l'arbre (5) avec une forme sinusoïdale et étant en contact continu avec lui, caractérisé en ce que la surface cylindrique (3), la (les) nervure(s) d'arrêt (4) et l'arbre (5) entourent des volumes libres à action capillaire, en ce que la surface cylindrique (3) déborde axialement des deux côtés de la (des) nervure(s) d'arrêt (4) et en ce que l'angle maximal d'inclinaison entre la nervure d'arrêt (4) de profil sinusoïdal et la direction circonférentielle est inférieur à 20°.

2. Joint d'arbre selon la revendication 1, caractérisé en ce que l'angle maximal entre la nervure d'arrêt (4) et la direction circonférentielle est inférieur à 10°.

3. Joint d'arbre selon une des revendications 1 ou 2, caractérisé en ce que l'angle maximal entre la nervure d'arrêt (4) et la direction circonférentielle est inférieur à 5°.

4. Joint d'arbre selon une des revendications 1 à 3, caractérisé en ce que la nervure d'arrêt (4) comporte un profil délimité par deux surfaces inclinées se coupant mutuellement et en ce que la surface inclinée dirigée vers le volume à étancher fait avec l'axe du joint un angle plus obtus que la surface inclinée opposée.

5. Joint d'arbre selon la revendication 4, caractérisé en ce que les surfaces inclinées se rejoignent mutuellement avec un arrondi.
